# EUROPEAN PATENT APPLICATION

(11) **EP 4 060 466 A1**
(43) Date of publication of application: **21.09.2022**
(21) Application number: 21194309.7
(22) Date of filing: 01.09.2021
(51) Int. Cl.: G06F 3/04817, G06F 3/04842

(54) **INFORMATION PROCESSING APPARATUS, PROGRAM, AND INFORMATION PROCESSING METHOD**

(30) Priority: 15.03.2021 JP 2021041854
(71) Applicant: FUJIFILM Business Innovation Corp., Minato-ku Tokyo (JP)
(72) Inventor: YAMADA, Ryohei, Yokohama-shi (JP); HASUIKE, Kimitake, Yokohama-shi (JP); IKEDA, Eriko, Yokohama-shi (JP); ISHIHARA, Ayaka, Yokohama-shi (JP)
(74) Representative: Becker, Eberhard

(57) **Abstract**

An information processing apparatus includes a processor configured to display a thumbnail image of a file on a screen, display an enlargement instruction image for instructing to enlarge and display the thumbnail image to be superimposed on at least a part of the thumbnail image, and in a case where the enlargement instruction image is designated, display an enlarged thumbnail image enlarged from the thumbnail image on the screen.

## Description

### BACKGROUND OF THE INVENTION

### (i) Field of the Invention

The present invention relates to an information processing apparatus, a program, and an information processing method.

### (ii) Description of Related Art

In the related art, there is an apparatus or software that digitizes and manages a file such as data read by a scanner or a document created by an application on a personal computer (PC), for example. In such an apparatus or software, a plurality of application files, image files, and the like are managed, and in that case, a so-called "thumbnail image" is used. This thumbnail image is a reduced image for displaying a list of the files, and contents can be approximatively grasped without opening the file, which is highly convenient.

For example, JP2008-077210A describes an image display apparatus capable of enlarging and displaying an image in an appropriate mode by a simple operation in a case where a page is opened by using a thumbnail image.

### SUMMARY OF THE INVENTION

In a case where the file is managed by using the thumbnail image and there is a function to enlarge the thumbnail image, the contents can be grasped in more detail without opening the file, which makes it easier to manage the file.

In the operation of this enlargement, for example, in a case where a configuration is such that the thumbnail is enlarged only by accepting an instruction on an area in which the thumbnail is displayed, the enlargement may occur unintentionally by a user and operability may be deteriorated.

According to an aspect of the present disclosure, there is an information processing apparatus, a program, and an information processing method that suppress a decrease in user operability as compared with a case where a thumbnail image is enlarged only by accepting an instruction on an area in which a thumbnail is displayed.

According to a first aspect of the present disclosure, there is provided an information processing apparatus including a processor configured to display a thumbnail image of a file on a screen, display an enlargement instruction image for instructing to enlarge and display the thumbnail image to be superimposed on at least a part of the thumbnail image, and in a case where the enlargement instruction image is designated, display an enlarged thumbnail image enlarged from the thumbnail image on the screen.

According to a second aspect of the present disclosure, in the information processing apparatus according to the first aspect, the processor may be configured to in a case where a predetermined operation is performed by a user, control the display of the enlarged thumbnail image to be maintained even in a case where the designation of the enlargement instruction image is canceled.

According to a third aspect of the present disclosure, in the information processing apparatus according to the second aspect, the processor may be configured to control the enlarged thumbnail image not to move in a case where a scroll operation is performed on the screen in a state in which the display of the enlarged thumbnail image is maintained.

According to a fourth aspect of the present disclosure, in the information processing apparatus according to the second aspect, the processor may be configured to in a case where the enlarged thumbnail image is displayed, display a maintenance instruction image for instructing to maintain the display of the enlarged thumbnail image, and in a case where the maintenance instruction image is designated, control the display of the enlarged thumbnail image to be maintained.

According to a fifth aspect of the present disclosure, in the information processing apparatus according to the fourth aspect, the processor may be configured to in a case where the enlarged thumbnail image is displayed, change the enlargement instruction image to the maintenance instruction image and display the maintenance instruction image, and control the changed maintenance instruction image to function as the enlargement instruction image as well.

According to a sixth aspect of the present disclosure, in the information processing apparatus according to the fifth aspect, the processor may be configured to accept designation of the changed maintenance instruction image by a user operation different from the designation of the enlargement instruction image.

According to a seventh aspect of the present disclosure, in the information processing apparatus according to the second aspect, the processor may be configured to display a plurality of thumbnail images corresponding to a plurality of files on the screen, and in a case where display of one enlarged thumbnail image enlarged from one thumbnail image is maintained and another enlargement instruction image for instructing to enlarge and display another thumbnail image is designated, perform control such that another enlarged thumbnail image enlarged from the other thumbnail image is displayed while maintaining the display of the one enlarged thumbnail image.

According to an eighth aspect of the present disclosure, in the information processing apparatus according to the seventh aspect, the processor may be configured to even in a case where the predetermined operation is performed in a state in which the display of the one enlarged thumbnail image is maintained and in a state in which the other enlarged thumbnail image is displayed, control the display of the other enlarged thumbnail image not to be maintained.

According to a ninth aspect of the present disclosure, there is provided a program causing a computer to realize a function of displaying a thumbnail image of a file on a screen, a function of displaying an enlargement instruction image for instructing to enlarge and display the thumbnail image to be superimposed on at least a part of the thumbnail image on the screen, and a function of displaying, in a case where the enlargement instruction image is designated, an enlarged thumbnail image enlarged from the thumbnail image on the screen.

According to a tenth aspect of the present disclosure, there is provided an information processing method including displaying a thumbnail image of a file on a screen, displaying an enlargement instruction image for instructing to enlarge and display the thumbnail image to be superimposed on at least a part of the thumbnail image, and displaying, in a case where the enlargement instruction image is designated, an enlarged thumbnail image enlarged from the thumbnail image on the screen.

According to the first aspect of the present disclosure, a decrease in user operability is suppressed as compared with a case where the thumbnail image is enlarged only by accepting an instruction on an area in which a thumbnail is displayed.

According to the second aspect of the present disclosure, other operations can be performed while referring to the enlarged thumbnail image.

According to the third aspect of the present disclosure, a scroll operation can be performed while referring to the enlarged thumbnail image.

According to the fourth aspect of the present disclosure, it is possible to shift to a state in which the display of the enlarged thumbnail image is maintained by using a simpler operation, as compared with a configuration in which the display of the enlarged thumbnail image is maintained in a case where a key operation is performed.

According to the fifth aspect of the present disclosure, the operation of shifting from the display of the enlarged thumbnail image becomes easy, as compared with a case where the enlargement instruction image and the maintenance instruction image are separately displayed.

According to the sixth aspect of the present disclosure, it is possible to suppress the shift to a state in which the display of an unintended enlarged thumbnail image is maintained, as compared with a configuration in which the designation of the enlargement instruction image and the designation of the maintenance instruction image are the same.

According to the seventh aspect of the present disclosure, it is possible to check contents of one file while referring to contents of another file.

According to the eighth aspect of the aspect of the present, it is possible to prevent display contents of the screen from becoming complicated, as compared with a case where the display of a plurality of enlarged thumbnail images are maintained.

According to the ninth aspect of the present disclosure, a decrease in user operability is suppressed as compared with a case where the thumbnail image is enlarged only by accepting an instruction on an area in which a thumbnail is displayed.

According to the tenth aspect of the present disclosure, a decrease in user operability is suppressed as compared with a case where the thumbnail image is enlarged only by accepting an instruction on an area in which a thumbnail is displayed.

### BRIEF DESCRIPTION OF THE DRAWINGS

Exemplary embodiment(s) of the present invention will be described in detail based on the following figures, wherein:
Fig. 1 is a diagram illustrating an example of a hardware configuration of an image display apparatus 1 to which the present exemplary embodiment is applied;
Fig. 2 is a diagram illustrating an example of an operation screen;
Fig. 3 is a block diagram illustrating an example of a functional configuration of the image display apparatus 1;
Fig. 4 is a flowchart illustrating an example of a processing procedure of displaying an enlarged thumbnail image;
Figs. 5A and 5C are diagrams illustrating an example of displaying the operation screen, and Fig. 5A is a diagram illustrating a state before a thumbnail image is designated, Fig. 5B is a diagram illustrating a state in which the thumbnail image is designated and an enlargement instruction image is displayed, and Fig. 5C is a diagram illustrating a state in which the enlargement instruction image is designated and the enlarged thumbnail image is displayed;
Fig. 6 is a flowchart illustrating an example of a processing procedure of shifting to a state in which the display of the enlarged thumbnail image is maintained;
Figs. 7A and 7B are diagrams illustrating an example of a display screen in a case of shifting to the state in which the display of the enlarged thumbnail image is maintained, and Fig. 7A is a diagram illustrating an example of a display screen in a case where a maintenance instruction image is displayed, and Fig. 7B is a diagram illustrating an example of the display screen in the state in which the display of the enlarged thumbnail image is maintained;
Fig. 8 is a flowchart illustrating an example of a processing procedure of displaying another enlarged thumbnail image; and
Fig. 9 is a diagram illustrating an example of a display screen in a case where the other enlarged thumbnail image is displayed.

### DETAILED DESCRIPTION OF THE INVENTION

Hereinafter, exemplary embodiments of the present invention will be described with reference to drawings.

### [Hardware Configuration of Image Display Apparatus 1]

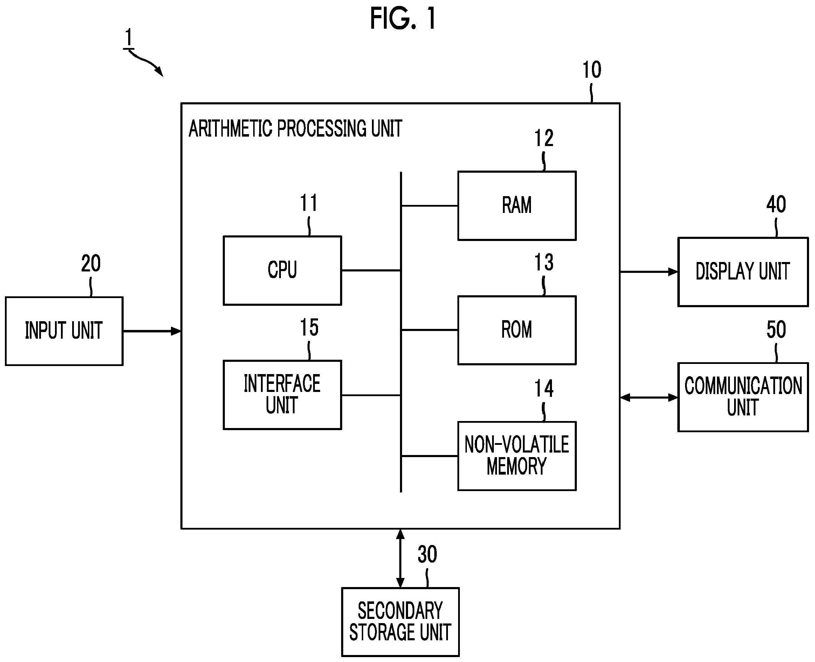

Fig. 1 is a diagram illustrating an example of a hardware configuration of an image display apparatus 1 to which the present exemplary embodiment is applied.

As illustrated in Fig. 1, the image display apparatus 1 according to the present exemplary embodiment functions as an example of an information processing apparatus, and includes an arithmetic processing unit 10 that executes a digital arithmetic process according to a predetermined processing program in a case of displaying a screen, an input unit 20 that accepts an input operation from a user, a secondary storage unit 30 that is realized by a hard disk drive (HDD), a display unit 40 that consists of a liquid crystal display panel, an organic electro luminescence (EL) display panel, or the like which displays an image, text information, or the like to the user, and a communication unit 50 which transmits and accepts data via a network.

The arithmetic processing unit 10 includes a central processing unit (CPU) 11 that controls the entire apparatus, as an example of a processor, a random access memory (RAM) 12 to be used as a working memory of the CPU 11, a read only memory (ROM) 13 that stores an image display processing program or the like executed by the CPU 11, a non-volatile memory 14 such as a static RAM (SRAM), a flash memory, or the like backed up by battery, that is rewritable and can hold data even in a case where power supply is interrupted, and an interface unit 15 that controls each unit such as the input unit 20 connected to the arithmetic processing unit 10. Image information such as thumbnail images (described below) displayed on the display unit 40 is stored in the non-volatile memory 14.

In addition to storing image data and the like, the secondary storage unit 30 also stores an image display processing program to be executed by the arithmetic processing unit 10, and the arithmetic processing unit 10 reads the image display processing program to execute each process of the image display apparatus 1 according to the present exemplary embodiment.

Here, the program executed by the CPU 11, which is an example of a processor, is provided to the arithmetic processing unit 10 in a state of being stored in a computer-readable recording medium such as a magnetic recording medium (a magnetic tape, a magnetic disk, or the like), an optical recording medium (an optical disk, or the like), an optical magnetic recording medium, a semiconductor memory, or the like. Further, the program executed by the CPU 11 may be downloaded to the image display apparatus 1 by using a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The input unit 20 is an apparatus such as a pointing device by which the user inputs an operation.

For example, in a case where the input unit 20 is a mouse or the like, the user can designate a position on a screen of the display unit 40, a displayed image, or the like by performing a cursor movement operation or a click operation.

Further, in a case where the input unit 20 is a touch panel or the like, the user can designate a position on a screen or a displayed image by performing an operation of touching the touch panel with a finger or the like or an operation of maintaining the touched state of the finger or the like for a longer time than a predetermined time. In this case, the input unit 20 is provided integrally with the display unit 40.

In addition to the apparatus such as the pointing device described above, a keyboard or the like for performing a key input operation may be provided as the input unit 20.

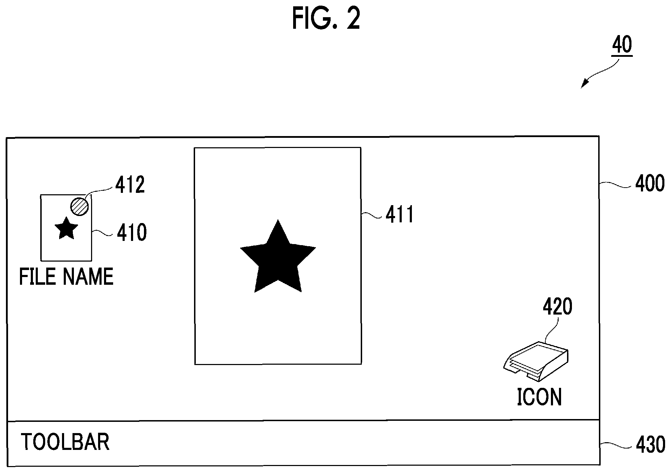

Fig. 2 is a diagram illustrating an example of an operation screen.

As illustrated in Fig. 2, the display unit 40 displays an operation screen 400. The operation screen 400 is a workspace on file handling software, and is an area in which an image related to a file selected by the user, a thumbnail image 410 (which will be described below), and the like are arranged. The file handling software is software that digitizes and manages files such as image data or document data, and has a function of promoting unified management of paper and electronic files.

In addition to the thumbnail image 410, instruction images such as an icon 420, a toolbar 430, an enlarged thumbnail image 411, and an enlargement instruction image 412 are displayed, on the operation screen 400.

The icon 420 represents various types of functions such as a program function with pictograms. Further, the toolbar 430 is an aggregation of instruction units that accept instructions from the user.

The thumbnail image 410 is an image for checking contents before opening a file, and the enlarged thumbnail image 411 is an enlarged image of the thumbnail image 410. Further, the instruction image such as the enlargement instruction image 412 is an image for giving an instruction related to the display of the enlarged thumbnail image 411.

The thumbnail image 410 is an image for checking at least a part of the content of the file managed by the file handling software. For example, in a case where the corresponding file is image data, the file is simply displayed as a reduced image of the original image. In a case where the corresponding file is document data of a plurality of pages, a representative page such as a first page is displayed as a reduced image.

In the present exemplary embodiment, the thumbnail image 410 functions as an icon for opening the corresponding file. For example, by performing a specific operation such as a double-click operation on the thumbnail image 410, the corresponding file can be opened.

The enlarged thumbnail image 411 is an enlarged image of the thumbnail image 410 instructed to be enlarged by the user, and is displayed without starting a new program. It is assumed that the enlarged thumbnail image 411 is enlarged and displayed to a size that allows the user to understand the content of the thumbnail image 410. More specifically, it is assumed that the enlarged thumbnail image 411 is displayed larger than the corresponding thumbnail image 410.

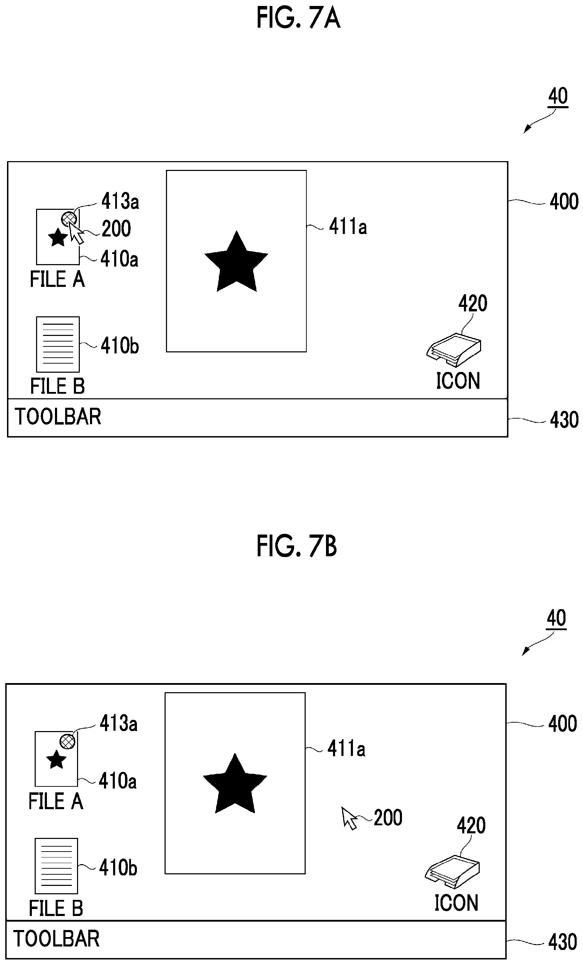

The instruction image is an image for accepting an operation of the user and giving an instruction related to the display of the enlarged thumbnail image 411, and is displayed in a state of being associated with the thumbnail image 410. In addition to the enlargement instruction image 412 illustrated in Fig. 2, various types of instruction images corresponding to the contents of the instruction such as a maintenance instruction image (which will be described below in Figs. 7A and 7B) are displayed.

In the present exemplary embodiment, the instruction image such as the enlargement instruction image 412 is displayed to be superimposed on an upper right corner portion of the thumbnail image 410. In this case, it is preferable that the instruction image is displayed so as not to reduce visibility of the thumbnail image 410, for example. For example, the enlargement instruction image 412 is displayed to be smaller than the thumbnail image 410. Further, the enlargement instruction image 412 is made semi-transparent and displayed so that a superimposed portion with the thumbnail image 410 can be seen through.

In addition, as illustrated in Fig. 2, a text such as a name of the file or a function corresponding to the thumbnail image 410 or the icon 420 may be displayed in association with each image. Further, the text may be displayed in association with the enlarged thumbnail image 411.

### [Functional Configuration of Image Display Apparatus 1]

Next, a functional configuration of the image display apparatus 1 will be described.

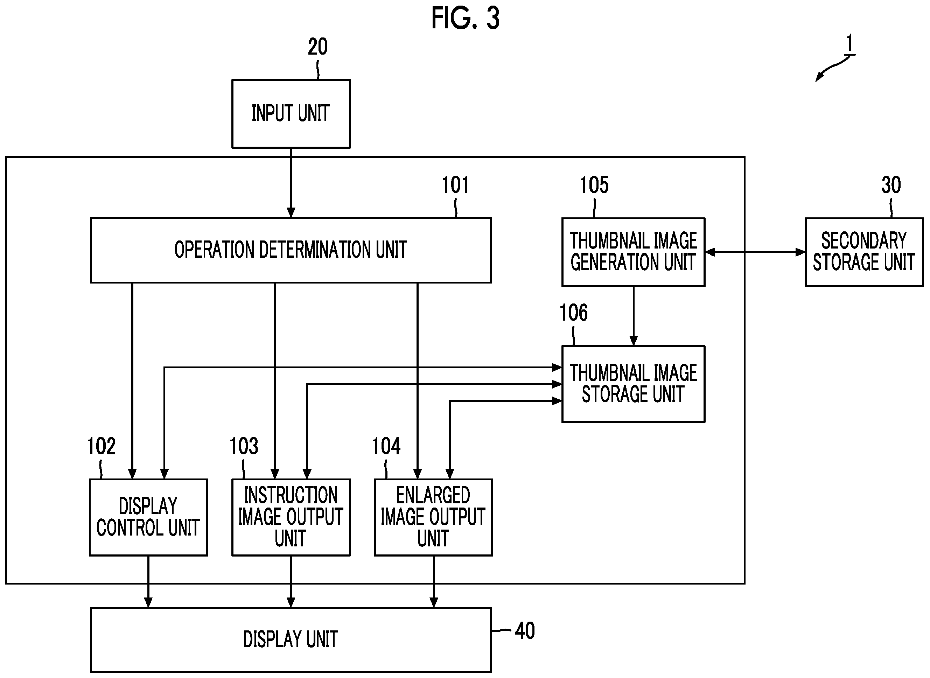

Fig. 3 is a block diagram illustrating an example of the functional configuration of the image display apparatus 1. As illustrated in Fig. 3, the image display apparatus 1 includes an operation determination unit 101, a display control unit 102, an instruction image output unit 103, an enlarged image output unit 104, a thumbnail image generation unit 105, and a thumbnail image storage unit 106, which are realized by the arithmetic processing unit 10 (see Fig. 1).

The operation determination unit 101 determines whether or not a user operation is performed via the input unit 20 on the operation screen 400 (see Fig. 2). The user operation is, for example, an operation of designating an image, an icon, a position, or the like on the operation screen 400, a scroll operation, a key input operation, or the like.

The display control unit 102 controls a display mode or position of the image, the icon 420, the toolbar 430 (see Fig. 2), or the like based on a content determined by the operation determination unit 101. Further, the thumbnail image 410 is received from the thumbnail image storage unit 106, and controlled to be displayed as an icon for opening the corresponding file.

The instruction image output unit 103 outputs an instruction image such as the enlargement instruction image 412 for assisting the operation of the user to the display unit 40 in a case of an enlargement instruction from the user or an instruction to maintain the display of the enlarged thumbnail image. This instruction image is displayed in a state of being associated with the thumbnail image 410.

The enlarged image output unit 104 receives the thumbnail image 410 from the thumbnail image storage unit 106, based on determination of designating the enlargement instruction image 412 by the operation determination unit 101. The enlarged image output unit 104 outputs the enlarged thumbnail image 411 which is enlarged from thumbnail image 410, to the display unit 40, without starting a new program.

The thumbnail image generation unit 105 generates a thumbnail image 440 to be displayed on the operation screen 400, based on a file such as image data stored in the secondary storage unit 30.

The thumbnail image storage unit 106 acquires and stores the thumbnail image 410 generated by the thumbnail image generation unit 105. The thumbnail image storage unit 106 is realized by the non-volatile memory 14.

### [Display of Enlarged Thumbnail Image]

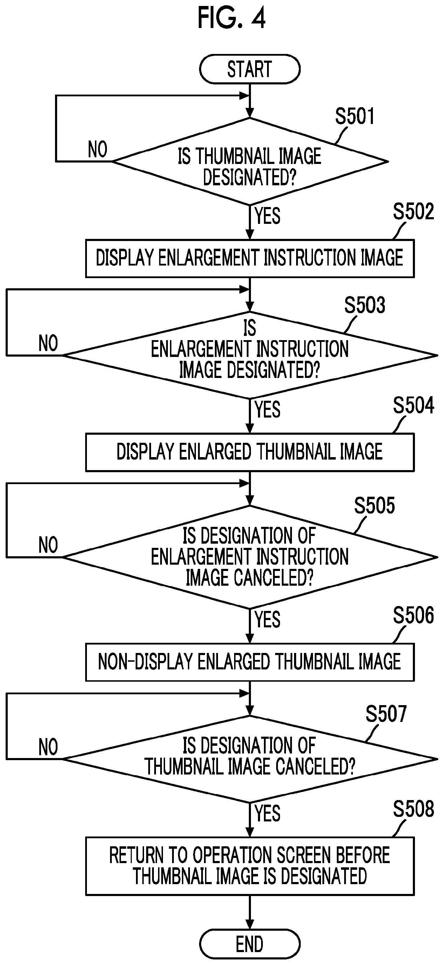

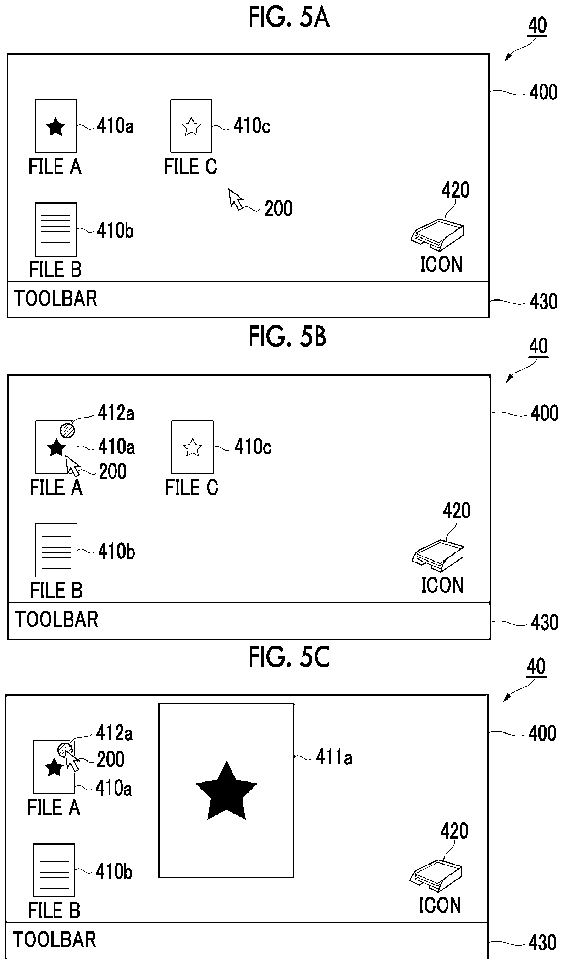

Next, the user operation and the display process in a case where the enlarged thumbnail image is displayed will be described with reference to Fig. 4 and Figs. 5A to 5C.

Fig. 4 is a flowchart illustrating an example of a processing procedure of displaying an enlarged thumbnail image.

Figs. 5A to 5C are diagrams illustrating an example of displaying an operation screen. Fig. 5A is a diagram illustrating a state before a thumbnail image is designated, Fig. 5B is a diagram illustrating a state in which the thumbnail image is designated and an enlargement instruction image is displayed, and Fig. 5C is a diagram illustrating a state in which the enlargement instruction image is designated and the enlarged thumbnail image is displayed.

As illustrated in Figs. 5A to 5C, the display unit 40 according to the present exemplary embodiment displays a cursor 200 indicating a position on the screen, an image, or the like, and an operation screen 400. The cursor 200 is moved by an operation of the user input via the input unit 20, and is displayed so as to point to the position, the image, or the like on the screen designated by the user.

Thumbnail images 410a, 410b, and 410c, the icon 420 corresponding to various types of functions, and the toolbar 430 are displayed on the operation screen 400. Hereinafter, the thumbnail images 410a, 410b, and 410c are collectively referred to as the thumbnail image 410, in some cases.

In the flowchart illustrated in Fig. 4, first, the operation determination unit 101 determines whether or not any of the thumbnail images 410 is designated based on an operation via the input unit 20 (step S501). In the present exemplary embodiment, the operation determination unit 101 determines that an operation of moving the cursor 200 so as to point to the thumbnail image 410a is the designation of the thumbnail image 410a. For example, a mouse over operation of positioning the cursor 200 on the thumbnail image 410a is determined as the designation of the thumbnail image 410a. As illustrated in Fig. 5A, in a case where the thumbnail image 410 is not designated (NO in step S501), the process waits until the thumbnail image 410 is designated. As illustrated in Fig. 5B, in a case where the thumbnail image 410a is designated (YES in step S501), the instruction image output unit 103 outputs and displays the enlargement instruction image 412a (step S502) .

Next, the operation determination unit 101 determines whether or not the enlargement instruction image 412a is designated based on an operation via the input unit 20 (step S503). The operation determination unit 101 according to the present exemplary embodiment determines, for example, that a mouse over operation on the enlargement instruction image 412a is the designation on the enlargement instruction image 412a. As illustrated in Fig. 5B, in a case where the enlargement instruction image 412a is not designated (NO in step S503), the process waits until the enlargement instruction image 412a is designated. As illustrated in Fig. 5C, in a case where the enlargement instruction image 412a is designated (YES in step S503), the enlarged image output unit 104 receives the thumbnail image 410a from the thumbnail image storage unit 106, and outputs and displays the enlarged thumbnail image 411a which is enlarged from the thumbnail image 410a to the display unit 40 (step S504).

Subsequently, the operation determination unit 101 determines whether or not the designation of the enlargement instruction image 412a is canceled (step S505). The cancellation of the designation of the enlargement instruction image 412a includes, for example, the cursor moving out of the enlargement instruction image 412a from above the enlargement instruction image 412a. In a case where the designation of the enlargement instruction image 412a is not canceled (NO in step S505), the display of the enlarged thumbnail image 411a is continued. In a case where the designation of the enlargement instruction image 412a is canceled (YES in step S505), the enlarged image output unit 104 stops the output to the display unit 40, and the enlarged thumbnail image 411a is not displayed (step S506) . With this process, in a case where the cursor 200 is on the enlargement instruction image 412a, the display of the enlarged thumbnail image 411a is maintained. Further, in a case where the cursor 200 is moved to a position different from the enlargement instruction image 412a, the enlarged thumbnail image 411a is not displayed.

Subsequently, the operation determination unit 101 determines whether or not the designation of the thumbnail image 411a is canceled (step S507). In a case where the designation of the thumbnail image 411a is not canceled (NO in step S507), the display of the enlargement instruction image 412a is continued. In a case where the designation of the thumbnail image 410a is canceled (YES in step S507), the enlarged image output unit 104 stops the output to the display unit 40, and the enlargement instruction image 412a is not displayed. As a result, the operation screen 400 returns to the state before the thumbnail image 410a is designated (step S508) .

The process of displaying the enlarged thumbnail image 411a is completed according to the above processing procedure.

In the present exemplary embodiment, as described above, the mouse over operation on the thumbnail image 410a or the enlargement instruction image 412a is determined as the designation of these images. In another exemplary embodiment, the operation determination unit 101 may determine another user operation, for example, a click operation as the designation of the thumbnail image 410a. Further, in addition to the designation of the thumbnail image 410a, a specific key input operation and an instruction operation from the instruction unit of the toolbar 430 may be used as determination conditions . Any one of these conditions is an example of a predetermined condition based on the operation of the user for displaying the enlargement instruction image 412a.

Further, for example, it can be configured to always display the enlargement instruction image 412a without providing step S501. Meanwhile, as in the present exemplary embodiment, by configuring the enlargement instruction image 412a to be displayed based on the operation of the user, the display of the enlarged thumbnail image 411a which is not intended by the user is suppressed, and operability of the user is improved.

The enlargement instruction image 412a may be displayed so as not to be superimposed on the corresponding thumbnail image 410a. In a case where the enlargement instruction image 412a is always displayed as described above, even in a case where the thumbnail image 410a and the enlargement instruction image 412a are displayed apart from each other, it is possible to designate the enlargement instruction image 412a.

Meanwhile, as illustrated in Figs. 5B and 5C, by displaying the enlargement instruction image 412a to be superimposed on at least a part of the thumbnail image 410a, a correspondence between the enlargement instruction image 412a and the thumbnail image 410a can be easily grasped, and the operability of the user is improved. Further, in the present exemplary embodiment, the operations from the designation of the thumbnail image 410a to the designation of the enlargement instruction image 412a can be smoothly performed.

Further, the enlarged thumbnail image 411a may be displayed so as to be superimposed on other display contents such as the corresponding thumbnail image 410a or another thumbnail image, the icon 420, the toolbar 430, and the like. In this case, since the enlarged thumbnail image 411a is displayed so as not to completely cover the enlargement instruction image 412a, it is possible to suppress the unintended cancellation of the designation of the enlargement instruction image 412a.

### [Display Maintenance of Enlarged Thumbnail Image]

As described above, in the present exemplary embodiment, in a case where the designation of the enlargement instruction image 412a is canceled, the enlarged thumbnail image 411a is not displayed. In a case where the user actually manages the file, it is convenient to have a function of maintaining the display of the enlarged thumbnail image 411a even in a case where the designation of the enlargement instruction image 412a is canceled.

The image display apparatus 1 according to the present exemplary embodiment shifts to a state in which the display of the enlarged thumbnail image 411a is maintained even in a case where the designation of the enlargement instruction image 412a is canceled, in a case where the user performs a predetermined operation.

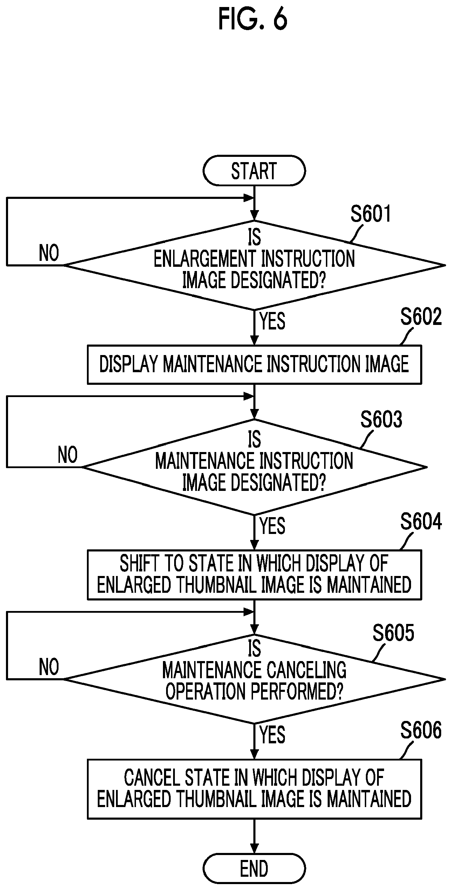

An operation example of the user and an example of a processing procedure will be described with reference to Fig. 6 and Figs. 7A and 7B, regarding the state in which the display of the enlarged thumbnail image 411a is maintained.

Fig. 6 is a flowchart illustrating an example of the processing procedure of shifting to the state in which the display of the enlarged thumbnail image 411a is maintained.

Figs. 7A and 7B are diagrams illustrating an example of a display screen in a case of shifting to the state in which the display of the enlarged thumbnail image 411a is maintained. Fig. 7A illustrates an example of a display screen in a case where a maintenance instruction image 413a is displayed, and Fig. 7B illustrates an example of a display screen in a state in which the display of the enlarged thumbnail image 411a is maintained.

In the flowchart illustrated in Fig. 6, first, the operation determination unit 101 (see Fig. 3) determines whether or not the enlargement instruction image 412a (see Fig. 5C) is designated (step S601) . In a case where the enlargement instruction image 412a is not designated (NO in step S601), the process waits until the enlargement instruction image 412a is designated and the enlarged thumbnail image 411a is displayed. In a case where the enlargement instruction image 412a is designated and the enlarged thumbnail image 411a is displayed (YES in step S601), the instruction image output unit 103 outputs and displays the maintenance instruction image 413a to the display unit 40 (step S602) . In the present exemplary embodiment illustrated in Fig. 7A, the enlargement instruction image 412a is changed to the maintenance instruction image 413a and displayed. In this case, the maintenance instruction image 413a also functions as an enlargement instruction image, and the enlargement can be instructed by a mouse over operation. That is, even in a case where the enlargement instruction image 412a is changed to the maintenance instruction image 413a and displayed, the designation of the enlargement instruction image by the mouse over operation is not canceled, and the display of the enlarged thumbnail image 411a is maintained as long as the mouse over operation on the maintenance instruction image 413a as the enlargement instruction image is continued.

Next, the operation determination unit 101 determines whether or not the maintenance instruction image 413a is designated (step S603). In the present exemplary embodiment, the operation determination unit 101 determines a click operation on the maintenance instruction image 413a as the designation on the maintenance instruction image 413a. As in the present exemplary embodiment, by accepting the designation of the enlargement instruction image 412a and the designation of the maintenance instruction image 413a with different user operations, the unintended shift to the state in which the display of the enlarged thumbnail image 411a is maintained is suppressed.

In a case where the maintenance instruction image 413a is not designated (NO in step S603), the process waits until the maintenance instruction image 413a is designated. In a case where the maintenance instruction image 413a is designated (YES in step S603), the process is shifted to the state in which the display of the enlarged thumbnail image 411a is maintained (step S604) .

As illustrated in Fig. 7B, in the state in which the display of the enlarged thumbnail image 411a is maintained, the display of the enlarged thumbnail image 411a is maintained even in a case where the mouse over operation on the maintenance instruction image 413a as the enlargement instruction image is canceled. Further, in the state in which the display of the enlarged thumbnail image 411a is maintained, the display of the enlarged thumbnail image 411a is maintained even in a case where another operation, for example, a scroll operation on the operation screen 400 is performed. Further, in the present exemplary embodiment, a position of the enlarged thumbnail image 411a on the screen is fixed, so that the enlarged thumbnail image 411a does not move even in a case where the scroll operation is performed.

Subsequently, the operation determination unit 101 determines whether or not an operation of canceling the state in which the display of the enlarged thumbnail image 411a is maintained is performed (step S605) . In the present exemplary embodiment, performing a click operation at a position other than an area in which the enlarged thumbnail image 411a is displayed, for example, at a position of the cursor 200 in Fig. 7B, is determined to be an operation of canceling the state in which the display of the enlarged thumbnail image 411a is maintained. In a case where the canceling operation is not performed (NO in step S605), the state in which the display of the enlarged thumbnail image 411a is maintained is continued. In a case where the canceling operation is performed (YES in step S605), the state in which the display of the enlarged thumbnail image 411a is maintained is canceled (step S606).

The process of displaying the enlarged thumbnail image 411a is completed according to the above processing procedure.

In the example described above, the operation of designating the maintenance instruction image 413a is configured to shift to the state in which the display of the enlarged thumbnail image 411a is maintained. The operation of shifting to the state in which the display of the enlarged thumbnail image 411a is maintained may be performed by another predetermined operation such as a key operation.

Further, in a case of shifting to the state in which the display of the enlarged thumbnail image 411a is maintained, the configuration may be provided so that the maintenance instruction image 413a is not displayed, or the enlargement instruction image 412a and the maintenance instruction image 413a are independently displayed at different positions. As in the present exemplary embodiment, the enlargement instruction image 412a is changed to the maintenance instruction image 413a and displayed, so that the operation from displaying the enlarged thumbnail image 411a to shifting to the state in which the display of the enlarged thumbnail image 411a is maintained can be smoothly performed.

Further, in the state in which the display of the enlarged thumbnail image 411a is maintained, the maintenance instruction image 413a may be changed to another image. By changing the maintenance instruction image 413a to the other image, it becomes easier for the user to recognize that the display of the enlarged thumbnail image 411a is maintained.

### [Display of Other Enlarged Thumbnail Image]

In a case where a plurality of files is managed, it is convenient to have a function of displaying two or more enlarged thumbnail images so that the contents can be compared.

With the image display apparatus 1 according to the present exemplary embodiment, in a case of a state in which the display of one enlarged thumbnail image 411a, which is enlarged from one thumbnail image 410a, is maintained, it is possible to display the other enlarged thumbnail image 411b, which is enlarged from the other thumbnail image 410b.

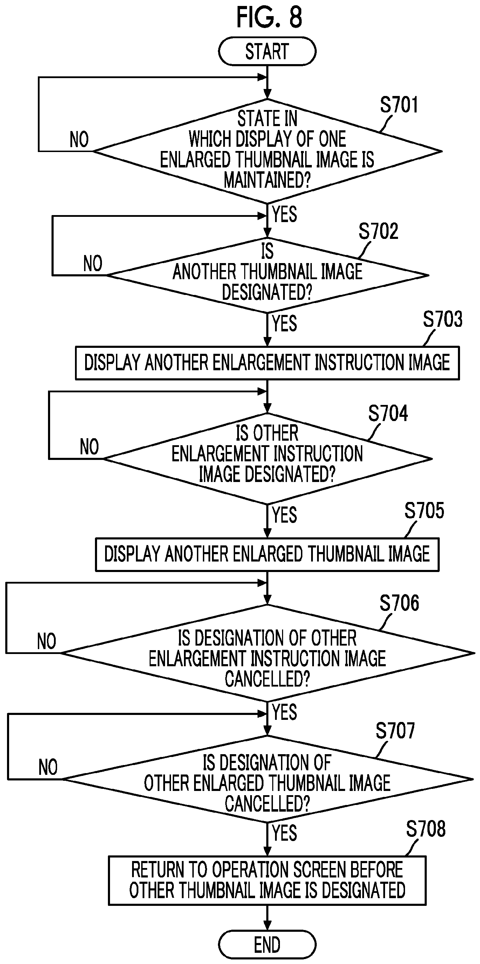

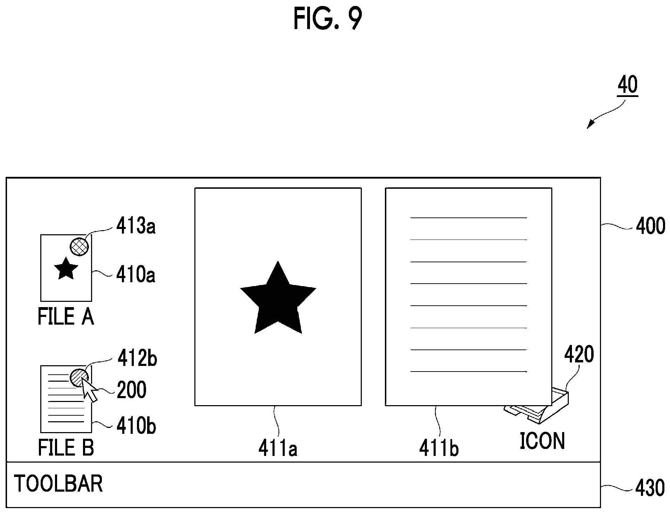

An operation example of the user and an example of a processing procedure in a case where the other enlarged thumbnail image is displayed will be described with reference to Figs. 8 and 9.

Fig. 8 is a flowchart illustrating an example of a processing procedure of displaying the other enlarged thumbnail image 411b.

Fig. 9 illustrates an example of a display screen in a case where the other enlarged thumbnail image 411b is displayed while maintaining the display of the one enlarged thumbnail image 411a.

In the flowchart illustrated in Fig. 8, first, the operation determination unit 101 (see Fig. 3) determines whether or not display of the one enlarged thumbnail image 411a is maintained. More specifically, it is determined whether or not an operation of designating the maintenance instruction image 413a is performed (step S701). In a case where the display of the one enlarged thumbnail image 411a is not maintained (NO in step S701), the process waits until the display of the one enlarged thumbnail image 411a is maintained. In a case where the display of the one enlarged thumbnail image 411a is maintained (YES in step S701), the process is shifted to step S702, and whether or not another thumbnail image 410 different from the one thumbnail image 410a is designated is determined. In a case where the other thumbnail image 410 is not designated (NO in step S702), the process waits until the other thumbnail image 410 is designated. In a case where another thumbnail image, for example, the other thumbnail image 410b is designated as illustrated in Fig. 9 (YES in step S702), the instruction image output unit 103 outputs and displays an enlargement instruction image 412b corresponding to the other thumbnail image 410b (step S703).

Next, the operation determination unit 101 determines whether or not the other enlargement instruction image 412b is designated based on an operation via the input unit 20 (step S704). In the present exemplary embodiment, the operation determination unit 101 determines that a mouse over operation on the other enlargement instruction image 412b is the designation of the other enlargement instruction image 412b. In a case where the other enlargement instruction image 412b is not designated (NO in step S704), the process waits until the other enlargement instruction image 412b is designated. As illustrated in Fig. 9, in a case where the other enlargement instruction image 412b is designated (YES in step S704), the enlarged image output unit 104 receives the other thumbnail image 410b from the thumbnail image storage unit 106, and outputs and displays the other enlarged thumbnail image 411b, which is enlarged from the thumbnail image 410b, to the display unit 40 (step S705).

Subsequently, the operation determination unit 101 determines whether or not the designation of the other enlargement instruction image 412b is canceled (step S706). In a case where the designation of the other enlargement instruction image 412b is not canceled (NO in step S706), the display of the other enlarged thumbnail image 411b is continued. In a case where the designation of the other enlargement instruction image 412b is canceled (YES in step S706), the enlarged image output unit 104 stops the output to the display unit 40, and the other enlarged thumbnail image 411b is not displayed.

Subsequently, the operation determination unit 101 determines whether or not the designation of the other enlarged thumbnail image 411b is canceled (step S707) . In a case where the designation of the other enlarged thumbnail image 411b is not canceled (NO in step S707), the display of the other enlargement instruction image 412b is continued. In a case where the designation of the other thumbnail image 410b is canceled (YES in step S707), the enlarged image output unit 104 stops the output to the display unit 40, and the other enlargement instruction image 412b is not displayed. In this manner, the operation screen 400 returns to the display content before the other thumbnail image 410b is designated (step S708) .

The process of displaying the other enlarged thumbnail image 411b is completed according to the above processing procedure.

Although Figs. 8 and 9 illustrate the example of displaying the two enlarged thumbnail images 411a and 411b, the three or more enlarged thumbnail images 411 may be displayed. More specifically, after step S705, in a state in which the display of the other enlarged thumbnail image 411b is maintained according to the same procedure as the procedure of the one enlarged thumbnail image 411a, the third enlarged thumbnail image 411 corresponding to the thumbnail image 410c or the like may be displayed.

Meanwhile, the image display apparatus 1 according to the present exemplary embodiment is configured so that the state in which the display of the one enlarged thumbnail image 411a is maintained is not shifted to the state in which the display of the other enlarged thumbnail image 411b is maintained. By not providing a state in which the displays of the two or more enlarged thumbnail images 411 are displayed, it is possible to prevent the display contents of the display unit 40 from becoming complicated and to suppress a decrease in operability of the user.

Further, in a case where the plurality of enlarged thumbnail images 411 are displayed, some of the enlarged thumbnail images 411 may be displayed so as to be superimposed with each other. Meanwhile, by displaying the plurality of enlarged thumbnail images 411 so as not to be superimposed with each other as in the display example of Fig. 9, the contents of the file can be grasped in more detail as compared with the case where some of the enlarged thumbnail images are displayed so as to be superimposed with each other. Further, for example, the display control unit 102 may change a size or a position of the enlarged thumbnail images 411 to control the display so that the enlarged thumbnail images 411 are not superimposed with each other.

The operation of enlarging the other thumbnail image 410b or the display of the enlargement instruction image 412b and the other enlarged thumbnail image 411b has various aspects, in the same manner as the display of the enlarged thumbnail image 411a described in Fig. 4 and Figs. 5A to 5C.

The process performed by the image display apparatus 1 according to the present exemplary embodiment is prepared, for example, as a program such as application software. The program can be provided by a communication section as well as provided by being stored in a recording medium such as a CD-ROM or the like.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 1:: Image display apparatus
- 10:: Arithmetic processing unit
- 11:: CPU
- 12:: RAM
- 13:: ROM
- 14:: Non-volatile memory
- 15:: Interface unit
- 20:: Input unit
- 30:: Secondary storage unit
- 40:: Display unit
- 50:: Communication unit
- 101:: Operation determination unit
- 102:: Display control unit
- 103:: Instruction image output unit
- 104:: Enlarged image output unit
- 105:: Thumbnail image generation unit
- 106:: Thumbnail image storage unit
- 411,411a, 411b:: Enlarged thumbnail image
- 412, 412a, 412b:: Enlargement instruction image
- 413a:: Maintenance instruction image

## Claims

1. An information processing apparatus comprising:
a processor configured to:
display a thumbnail image of a file on a screen;
display an enlargement instruction image for instructing to enlarge and display the thumbnail image to be superimposed on at least a part of the thumbnail image; and
in a case where the enlargement instruction image is designated, display an enlarged thumbnail image enlarged from the thumbnail image on the screen.

2. The information processing apparatus according to claim 1, wherein the processor is configured to:
in a case where a predetermined operation is performed by a user, control the display of the enlarged thumbnail image to be maintained even in a case where the designation of the enlargement instruction image is canceled.

3. The information processing apparatus according to claim 2, wherein the processor is configured to:
control the enlarged thumbnail image not to move in a case where a scroll operation is performed on the screen in a state in which the display of the enlarged thumbnail image is maintained.

4. The information processing apparatus according to claim 2, wherein the processor is configured to:
in a case where the enlarged thumbnail image is displayed, display a maintenance instruction image for instructing to maintain the display of the enlarged thumbnail image, and
in a case where the maintenance instruction image is designated, control the display of the enlarged thumbnail image to be maintained.

5. The information processing apparatus according to claim 4, wherein the processor is configured to:
in a case where the enlarged thumbnail image is displayed, change the enlargement instruction image to the maintenance instruction image and display the maintenance instruction image, and
control the changed maintenance instruction image to function as the enlargement instruction image as well.

6. The information processing apparatus according to claim 5, wherein the processor is configured to:
accept designation of the changed maintenance instruction image by a user operation different from the designation of the enlargement instruction image.

7. The information processing apparatus according to claim 2, wherein the processor is configured to:
display a plurality of thumbnail images corresponding to a plurality of files on the screen, and
in a case where display of one enlarged thumbnail image enlarged from one thumbnail image is maintained and another enlargement instruction image for instructing to enlarge and display another thumbnail image is designated, perform control such that another enlarged thumbnail image enlarged from the other thumbnail image is displayed while maintaining the display of the one enlarged thumbnail image.

8. The information processing apparatus according to claim 7, wherein the processor is configured to:
even in a case where the predetermined operation is performed in a state in which the display of the one enlarged thumbnail image is maintained and in a state in which the other enlarged thumbnail image is displayed, control the display of the other enlarged thumbnail image not to be maintained.

9. A program causing a computer to realize:
a function of displaying a thumbnail image of a file on a screen;
a function of displaying an enlargement instruction image for instructing to enlarge and display the thumbnail image to be superimposed on at least a part of the thumbnail image on the screen; and
a function of displaying, in a case where the enlargement instruction image is designated, an enlarged thumbnail image enlarged from the thumbnail image on the screen.

10. An information processing method comprising:
displaying a thumbnail image of a file on a screen;
displaying an enlargement instruction image for instructing to enlarge and display the thumbnail image to be superimposed on at least a part of the thumbnail image; and
displaying, in a case where the enlargement instruction image is designated, an enlarged thumbnail image enlarged from the thumbnail image on the screen.
